# EUROPEAN PATENT SPECIFICATION

(11) **EP 3 761 201 B1**
(45) Date of publication and mention of the grant of the patent: **07.08.2024**
(21) Application number: 19184108.9
(22) Date of filing: 03.07.2019
(51) Int. Cl.: G06F 21/57, H04L 9/08, H04L 9/06

(54) **CRYPTOGRAPHIC MEMORY ATTESTATION**
KRYPTOGRAFISCHE SPEICHERATTESTIERUNG
ATTESTATION DE MÉMOIRE CRYPTOGRAPHIQUE

(43) Date of publication of application: 06.01.2021
(73) Proprietor: Nokia Technologies Oy, 02610 Espoo (FI)
(72) Inventor: OLIVER, Ian Justin, 01150 Söderkulla (FI); KOK, Jan, 81245 Munich (DE); LIMONTA, Gabriela, 02230 Espoo (FI)
(74) Representative: Laine IP Oy

(56) References cited:
- WO-A1-2009/055147
- US-A1- 2013 254 636
- US-A1- 2018 309 578
- US-B1- 8 848 905

## Description

### FIELD

The present disclosure relates to the field of secure memory management in integrated devices.

### BACKGROUND

A trusted platform module, TPM, is a secure cryptoprocessor engineered to increase reliability of various aspects of processing and processing hardware. In detail, a TPM may comprise a microcontroller designed to make hardware elements more difficult to tamper with without detection, by using cryptographic processes.

A TPM may be configured with circuitry to support platform integrity, disk encryption and system password protection, for example. By platform integrity it is meant confidence in an untampered state of the platform, for example, that a read-only memory of the platform has not been compromised by introduction of an unauthorized version of firmware. An example of disk encryption is the BitLocker mechanism.

Document WO2009/055147 A1 discloses a method to authenticate a program using a security module, wherein the security module accesses a memory to hash memory contents. The access of the security module to the memory is via a memory/graphics interface chip. Document US2013/254636 A1 discloses a SoC for cryptography using a physically unclonable function, PUF, wherein the PUF is configured to receive a seed value as an input to generate a key as an output. The system generates keys that are used N times to perform cryptographic functions.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising a random access memory device, at least one processing core coupled via a first interface with the random access memory device, and a secure hardware element, comprising hash function circuitry, and coupled directly via a second interface with the random access memory device, the secure hardware element configured to obtain as input data from a memory space of the random access memory device, to produce as output a hash value of the input, and to cryptographically sign the hash value using a physically unclonable function value of the apparatus.

According to a second aspect of the present disclosure, there is provided a method in an apparatus comprising obtaining, by a secure hardware element, as input data from a memory space of a random access memory device, producing as output a hash value of the input, and cryptographically signing the hash value using a physically unclonable function value of the apparatus, wherein the apparatus comprises the random access memory device, at least one processing core coupled via a first interface with the random access memory device, and the secure hardware element, which is coupled directly via a second interface with the random access memory device.

According to a third aspect of the present disclosure, there is provided an apparatus comprising means for obtaining, by a secure hardware element, as input data from a memory space of a random access memory device, means for producing as output a hash value of the input, and means for cryptographically signing the hash value using a physically unclonable function value of the apparatus, wherein the apparatus comprises the random access memory device, at least one processing core coupled via a first interface with the random access memory device, and the secure hardware element, which is coupled directly via a second interface with the random access memory device.

### BRIEF DESCRIPTION OF THE DRAWINGS

FIGURE 1 illustrates an example system in accordance with at least some embodiments of the present invention;
FIGURE 2 illustrates a process in accordance with at least some embodiments of the present invention;
FIGURE 3 is a flow graph of a method in accordance with at least some embodiments of the present invention;
FIGURE 4 illustrates signalling in accordance with at least some embodiments of the present invention, and
FIGURE 5 illustrates platform configuration register to memory mapping in accordance with at least some embodiments of the present invention.

### EMBODIMENTS

A trusted boot mechanism for small, simple devices is herein disclosed, such that providing the trusted boot mechanism does not to an unacceptable degree increase the complexity of the device, such as a microcontroller configured to control a brake mechanism of a vehicle, a sensor node or a valve actuator, for example.

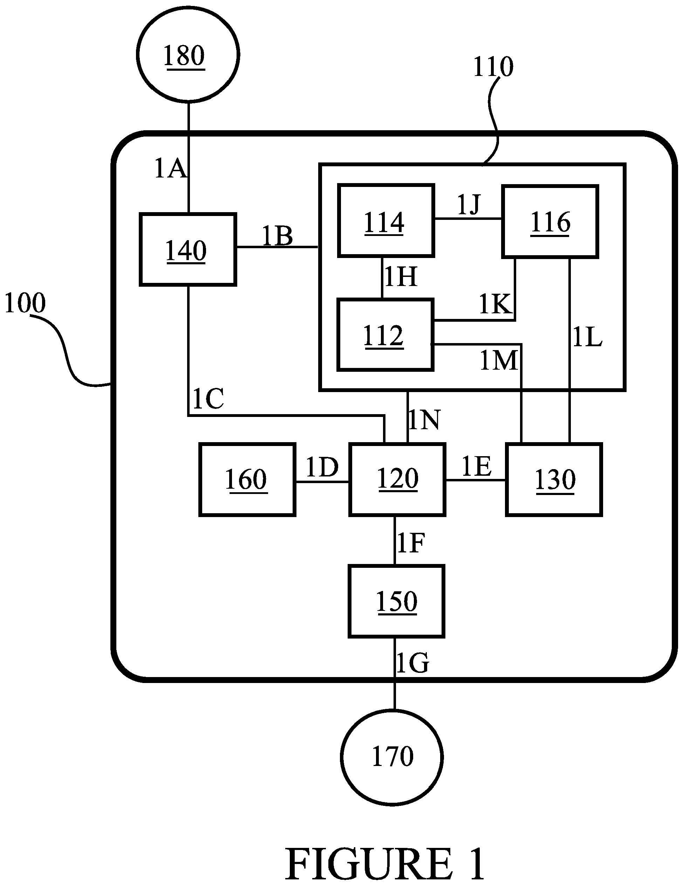

FIGURE 1 illustrates an example system in accordance with at least some embodiments of the present invention. Device 100 may comprise a device controller, such as a brake or pump controller, for example. Device 100 is connected, via connection 1G, to external system 170, such as a brake of a vehicle, an actuator mechanism or a fuel pump, for example. Connection 1G may comprise a control interface, for example wherein a specific potential is selected for connection 1G to control a fuel pump to pump at a specific rate, or for a brake to be applied at a specific pressure, selected in dependence of the specific potential. Another external connection of device 100 is via connection 1A, to a communication bus 180, used for controlling and programming device 100, for example. Connection 1A may be a serial or parallel connection, for example, and bus 180 may be based on internet protocol, IP, for example.

An interface device 140 is configured to output information to interface 1A, as directed by processor 120, via interface 1C. Processor 120 may comprise, for example, a single- or multi-core processor wherein a single-core processor comprises one processing core and a multi-core processor comprises more than one processing core. Processor 120 may comprise, in general, a control device. In detail, processor 120 may be a microcontroller which comprises one or two microcontroller processing cores. Processor 120 may comprise at least one application-specific integrated circuit, ASIC. Processor 120 may comprise at least one field-programmable gate array, FPGA. Processor 120 may be means for performing method steps in device 100, such as obtaining and producing information. Processor 120 may be configured, for example at least in part by computer instructions, to perform actions. Where processor 120 is an ASIC, it may be configured by its inherent structure.

A processor, such as processor 120, may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as controller device, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, or other computing or network device.

Processor 120 may be furnished with a transmitter arranged to output information from processor 120, via electrical leads internal to device 100, to other devices comprised in device 100. An example of such a lead is interface 1C. Such a transmitter may comprise a serial bus transmitter arranged to, for example, output information via at least one electrical lead to random access memory device 130 for storage therein. Alternatively to a serial bus, the transmitter may comprise a parallel bus transmitter. Likewise processor 120 may comprise a receiver arranged to receive information in processor 120, via electrical leads internal to device 100, from other devices comprised in device 100. Such a receiver may comprise a serial bus receiver arranged to, for example, receive information via at least one electrical lead from interface device 140 for processing in processor 120. Alternatively to a serial bus, the receiver may comprise a parallel bus receiver.

Processor 120 may communicate toward external system 170 via interface device 150. Interface device 150 may be configured to translate instructions it receives from processor 120 via connection 1F, to instructions expressed in a format that external system 170 can understand. These instructions to external system 170 may be provided via interface 1G.

Device 100 comprises a random access memory device 130, coupled with processor 120 via interface 1E, which may thus comprise a memory interface. Random access memory device 130 will hereafter be referred to as memory 130 for the sake of brevity. Random access memory device may comprise a static random-access memory, SRAM, chip, for example, or more than one such chip. Memory 130 may be at least in part comprised in processor 120. Memory 130 may be means for storing information. Memory 130 may comprise computer instructions that processor 120 is configured to execute. When computer instructions configured to cause processor 120 to perform certain actions are stored in memory 130, and device 100 overall is configured to run under the direction of processor 120 using computer instructions from memory 130, processor 120 and/or its at least one processing core may be considered to be configured to perform said certain actions. Memory 130 may be at least in part external to device 100 but accessible to device 100.

Device 100 may further comprise read-only memory, ROM, 160. ROM 160 is interfaced, in the example of FIGURE 1, with processor 120 via connection 1D, which is thus a memory interface. ROM 160 may be configured to store computer instructions which are executed in connection with powering up device 100, for example. In some embodiments, a computer program for controlling the functioning of device 100 is copied from ROM 160 to memory 130 in connection with start-up of device 100. For example, processor 120 may be configured to perform this copying via connections 1D and 1E.

Device 100 of FIGURE 1 further comprises a trusted element 110, which is a hardware circuitry device configured to provide trust functionality relating to device 100. Trusted element 110 may be a secure hardware element, such as a trusted platform module. A secure hardware element is an execution environment separate from processor 120. At least in some embodiments, trusted element 110 is non-programmable and thus its functioning cannot be hacked. Trusted element 110 comprises, in the example structure of FIGURE 1, identity processing circuitry 112, key provisioning circuitry 114 and hash function circuitry 116. In general, trusted element 110 and circuitry comprised therein, such as the hash function circuitry 116, may be means for performing actions, such a obtaining, providing and cryptographically signing.

Identity processing circuitry 112 is configured to generate an identifier characteristic of device 110. The identifier may be generated based on a physical unclonable function, PUF, derived from physical characteristics of at least one element of device 100. For example, the identity processing circuitry 112 may be configured with the identifier at manufacture. The physical characteristics may alternatively reflect unique physical variations which occur inevitably during semiconductor manufacturing. For example, the PUF may be based on manufacturing variability of the random access memory device 130. As the PUF is, physically, a manifestation of hardware manufacturing variability, it is a physical entity embodied in the physical structure of device 100, and will be stable between re-starts of device 100. Identity processing circuitry 112 may obtain the PUF from memory 130 via connection 1M. Alternatively to memory 130, the PUF may be based on manufacturing variability in processor 120 or trust element 110 itself, for example.

Key provisioning circuitry 114 is configured to generate an encryption key based on the identifier that identity processing circuitry 112 is configured to generate. The identifier may be provided from identify processing circuitry 112 to key provisioning circuitry 114 via connection 1H, as illustrated in FIGURE 1. In some embodiments, to save silicon space, only a single encryption function is configured in trust element 110. To save even more silicon space, in some embodiments cryptographic signing is the only cryptographic procedure supported by trust element 110. In embodiments in accordance with trusted platform module, TPM 2.0 standards, two encryption keys are generated, an endorsement key, EK, from the identifier generated by identity processing circuitry 112, and an attestation key is in turn derived from the EK, for example by the key provisioning circuitry 114.

Trust element 110 further comprises, in the example of FIGURE 1, a hash function circuitry 116. Hash function circuitry 116 is configured to generate a hash value over a set of input data which data from a memory space of the random access memory device 130. In some embodiments, the input further comprises the identifier generated from the physically unclonable function value by identity processing circuitry 112. In some embodiments, the input comprised, alternatively to the identifier or additionally to it, indications of a number of times device 100 has been restarted or reset. Trust element 110 can access the data from memory 13 via interface 1L, and the PUF-derived identifier via connection 1K. Hash function circuitry 116 may provide a hash value for signing to key provisioning circuitry 114 via connection 1J. Interface 1L may in practice be directly wired to memory interface 1E of memory 130. In general, an interface of the trusted element 110 may be directly wired to memory interface 1E of memory 130. In general, a direct interface between trusted element 110 to memory 130 may comprise a connection which does not traverse a processor, microcontroller or a basic input/output system, BIOS, for example.

Trust element 110 may have an interface 1B to interface device 140, for providing attested memory hashes, for example, to communication bus 180, to check that the contents of memory 130 are intact. Trust element 110 may have an optional connection 1N to processor 120, to enable processor 120 to trigger trusted actions by trust element 110, in embodiments where this is seen as useful.

Device 100 may comprise further devices not illustrated in FIGURE 1. In some embodiments, on the other hand, device 100 lacks at least one device described above. For example, some devices 300 may lack the ROM 160. The internal structure of trust element 110 is schematic, as the circuitries 112, 114 and 116 may in practice form a single unified circuitry of trusted element 110, having the functionalities described above. Such a single unified circuitry may be referred to a hash function circuitry 116, for example. In such a view, connections 1J, 1H and 1K would be comprised in the unified circuitry, and interfaces 1M and 1L would be comprised in an interface that trusted element 110 has with memory 130. As noted above, such an interface may be directly applied to memory interface 1E.

Processor 120, memory 130, interface device 140, interface device 140, and other elements of device 100 may be interconnected by electrical leads internal to device 100 in a multitude of different ways. For example, each of the aforementioned devices may be separately connected to a master bus internal to device 100, to allow for the devices to exchange information. However, as the skilled person will appreciate, this is only one example and depending on the embodiment various ways of interconnecting at least two of the aforementioned devices may be selected without departing from the scope of the present disclosure.

In use, to attest a memory space of memory 130, trusted element 110 may obtain data from a memory space of memory 130 and use the hash function circuitry 116 to derive a hash value of this data. Trusted element 110 may obtain the data from memory 130 using the interface with memory 130 that trusted element 110 has, trusted element 110 thus not relying on processor 120 to obtain the data. In some embodiments, the identifier provided by identity processing circuitry 112 may be included in the inputs to the hash function when deriving the hash value. Plural attestations may be generated, for overlapping memory spaces, for example.

The hash value obtained thus may be cryptographically signed using an encryption key generated using the identifier provided by identity processing circuitry 112, to obtain the attestation of the memory space. The attestation may be stored in platform configuration register, PCR, circuitry. PCR circuitry may be comprised in trusted element 110, for example. In various embodiments, trusted element 110 may have one, two or more than two platform configuration registers to store memory attestations. In the simplest case, a single attestation is derived over the entire contents of memory 130, that is, the memory space used to provide the data for the hash function is the entire memory space of memory 130. In some embodiments, one attestation is made for contents of the ROM 160, and a resulting attestation is stored in a platform configuration register of the platform configuration register circuitry of trusted element 110.

Signing the hash value may be performed in accordance with a public-key cryptosystem, such as a Rivest-Shamir-Adleman, RSA, or ElGamal public-key cryptosystem, for example. In this case, a public key - private key pair is generated based on the identifier from identity processing circuitry 112. In detail, a private key of such pair is usable in signing digital information, thus attesting that the owner of the private key has signed the information. The public key may in principle be distributed to enable verifying the signature is authentic, while the private key is to be closely held and not disclosed. For example, the private key may be stored in circuitry of trusted element 110, to keep it safe.

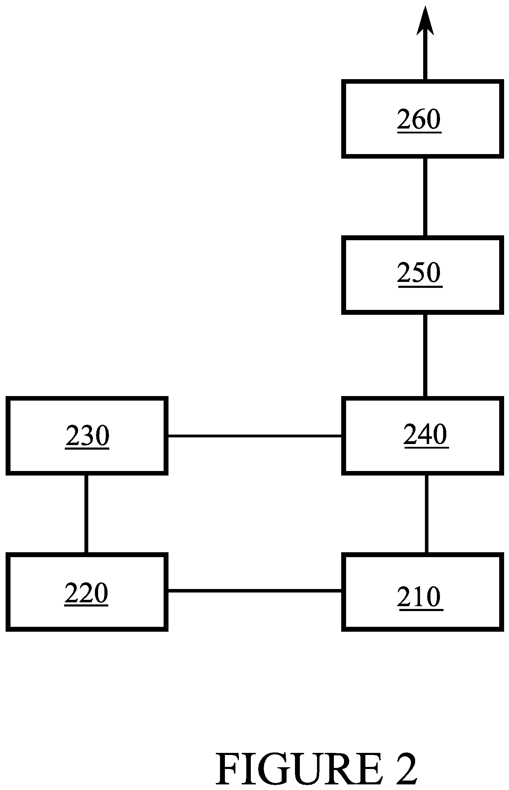

FIGURE 2 illustrates a process in accordance with at least some embodiments of the present invention. Block 210 represents the memory 130 of FIGURE 1, acting as the source of the data from the memory space to be attested. Block 220 represents physical characteristics of the device, such as the PUF, which provides the identifier, which is described herein above, to hash function circuitry 240 via the identity processing circuitry 230.

Hash function circuitry 240 computes the hash value using as input the data from the memory space and, optionally in some embodiments, also the identifier. The platform configuration registers, PCR, 250 store the hash value(s) thus generated, to be used for integrity measurement of that memory space. Quote generator 260 is configured to retrieve an attestation from a PCR register and to provide it as an integrity value relating to the specific memory space. As described herein, the attestation may comprise a hash value cryptographically signed using a key derived, directly or indirectly, from the identifier of the device, wherein the identifier may be based on a PUF, as described herein above. In general, the attestation(s) may be generated automatically for a fixes PCR list, such that a request for attestation need not specify memory space(s) to be attested. This would reduce need for silicon in circuitry, and also would conserve processing cycles. Each PCR may be mapped to a memory space, and thus be configured to attest the contents of this memory space.

As an example concerning the PCR registers, each PCR register may comprise a cryptographic hash value calculated be reading out the contents of a specific memory space of memory 130. The PCRs may be grouped into banks corresponding to a hash function. For example, secure hash algorithm 1, SHA1, and 256-bit secure hash algorithm 2, SHA256, banks may be provided. The cryptographic signing of the hash value may take place before storing the hash value in a PCR register, or as a response to a request for attestation. Either way, the attestation provided from trusted element 110 has a cryptographically signed hash value, the signing performed using a key derived from physical characteristics of device 100.

For example, SHA256-PCR0 may map to memory addresses 0x0000-0xFFFF and utilize a SHA256 function to calculate the cryptographic hash over the values in those locations. Likewise, SHA256-PCR1 may map to memory addresses 0x0000-0xFFFF and utilize a SHA256 function to calculate the cryptographic hash over the values in those locations and utilize the identifier value in the calculation to combine the identifier with the measured hashes in a known order. Other banks and PCR values may return a default value, such as : 0x0...0 or 0xF...F as required.

An ordering of the inputs from the identifier and memory the cryptographic hash calculation is defined on a per-system basis and may occur in any order, this order may be specified so that any possible external validation may be carried out. Requests for attestation may be received in trusted element 110 from communication bus 180, connection 1A, interface device 140 and connection 1B, for example. The attestations may be provided to communication bus 180 via the same route.

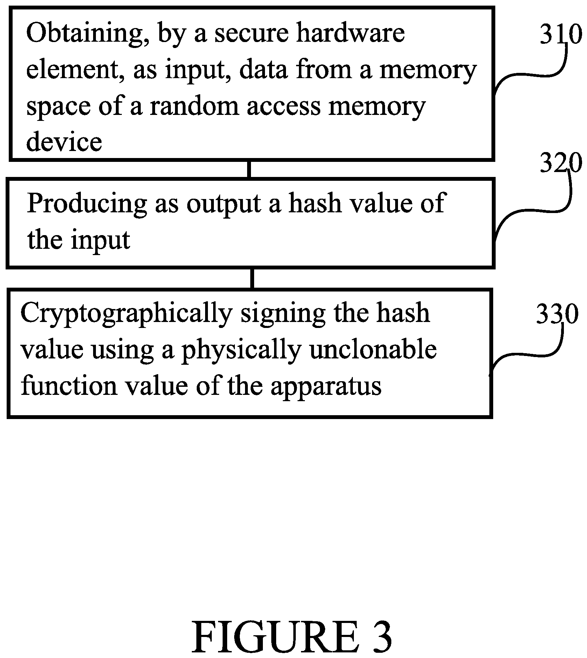

FIGURE 3 is a flow graph of a method in accordance with at least some embodiments of the present invention. The phases of the illustrated method may be performed in device 100 of FIGURE 1, or in a secure hardware element therein.

Phase 310 comprises obtaining, by a secure hardware element, as input data from a memory space of a random access memory device. The input may be obtained using an interface the secure hardware element has with the random access memory device, the interface being independent of a processor of the apparatus. The interface between the secure hardware element and the random access memory device may be direct in that it does not traverse a further device comprised in the apparatus, in particular, it does not traverse a processor of the apparatus. Phase 320 comprises producing as output a hash value of the input. Phase 330 comprises cryptographically signing the hash value using a physically unclonable function value of the apparatus. The apparatus comprises the random access memory device, at least one processing core coupled via a first interface with the random access memory device, and the secure hardware element, which is coupled directly via a second interface with the random access memory device.

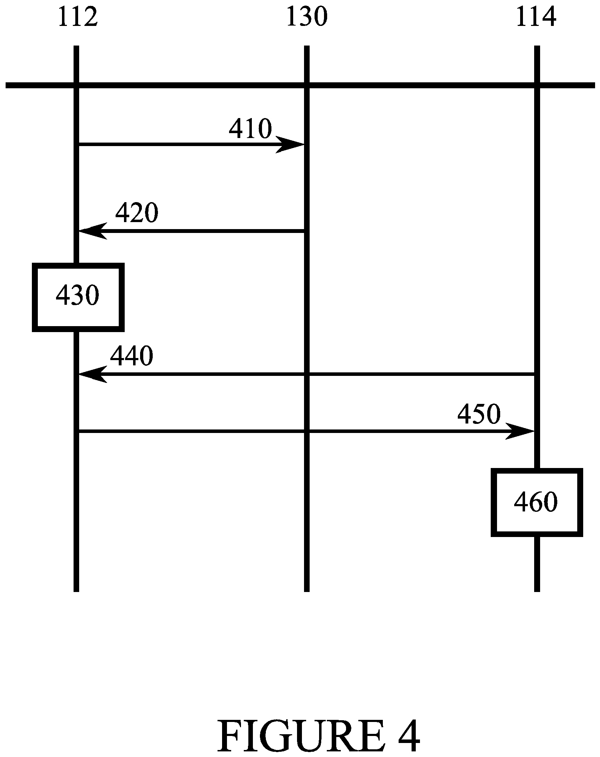

FIGURE 4 illustrates signalling in accordance with at least some embodiments of the present invention. On the vertical axes are disposed, from the left, identity processing circuitry 112, memory 130, and key provisioning circuitry 114. Time advances from the top toward the bottom. The identity processing circuitry 112 and the key provisioning circuitry 114 may be comprised in trusted element 110, as described above.

In phase 410, identity processing circuitry 112 requests characteristics of physical memory 130, for example over the direct interface between trusted element 110 and memory 130. Memory 130 responsively provides the requested characteristics in phase 420, enabling the identity processing circuitry 112 to generate a seed, based on the physical characteristics of the memory 130, in phase 430. The characteristics may define a PUF, for example, as is described herein above.

In phase 440, key provisioning circuitry 114 requests the seed generated in phase 430, and responsively received it in phase 450. The seed is used to generate a key, such as, for example, and encryption key. An example of a generated encryption key is the endorsement key, EK.

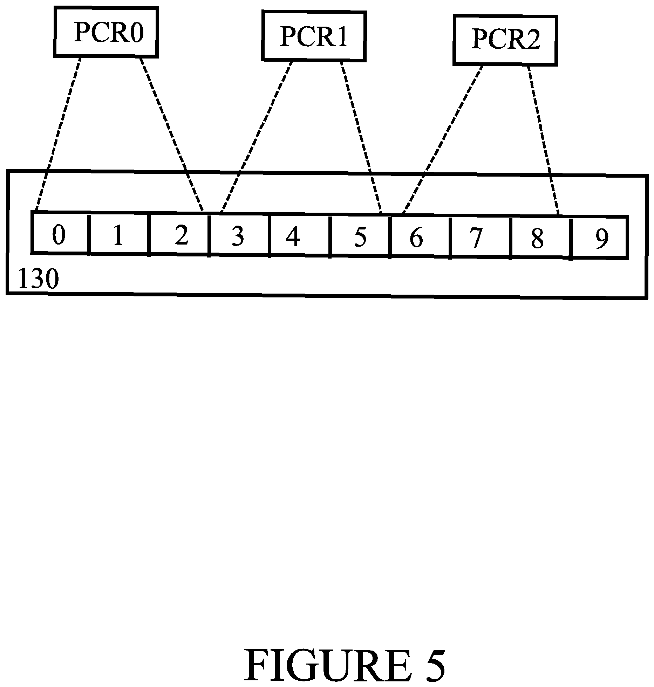

FIGURE 5 illustrates platform configuration register, PCR, to memory mapping in accordance with at least some embodiments of the present invention. The memory 130 is illustrated with ten example memory locations, 0x000 to 0x009, of which only the last digit is illustrated for the sake of clarity. A first PCR, PCR0, is obtained as a cryptographic hash of memory section 0x000 - 0x002. A second PCR, PCR1, is obtained as a cryptographic hash of memory section 0x003 - 0x005. A third PCR, PCR2, is obtained as a cryptographic hash of memory section 0x006 - 0x008.

For example, a request for a quote of the microcontroller device for PCR0 and PCR1 may be signed with a key, such as an attestation key. A process to achieve that may comprise, for example, receipt of a request for the quote(s). In response, the attestation key may be generated. To generate the attestation key, the endorsement key may be generated as discussed in connection with FIGURE 4. The attestation key may then be derived from the endorsement key, for example by using normal cryptographic methods for creating a certificate chain from the endorsement key.

PCR0 may comprise a hash of the memory locations that PCR0 is wired to or configured to read by intermediate circuitry. Likewise, PCR1 will contain a hash of the memory locations that PCR1 is wired to or configured to read by some intermediate circuitry. If using the trusted computing group, TCG, standards, then a TPMS_ATTEST structure may be generated from hashing together PCR0 and PCR1 in some supplied or predetermined order. The TPMS_ATTEST, or similar structure based on PCR0 and PCR1, may be signed by the generated attestation key, and returned as a response to the request for the quote.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in auditing memory contents.

**REFERENCE SIGNS LIST**

| | |
|---|---|
| 100 | The device of FIGURE 1 |
| 110 | Trusted element |
| 120 | Processor |
| 130 | Random access memory device ("memory") |
| 140, 150 | Interface device |
| 160 | Read only memory, ROM |
| 170 | External system |
| 180 | Communication bus |
| 112 | Identity processing circuitry |
| 114 | Key provisioning circuitry |
| 116 | Quote provisioning circuitry |
| 1A, 1B, 1C, 1D, 1E, 1F, 1G, 1H, 1J, 1K, 1L, 1M, 1N | Connections |
| 210 | Memory |
| 220 | Identifier of the device |
| 230 | Identity processing circuitry |
| 240 | Hash function circuitry |
| 250 | Platform configuration registers |
| 260 | Quote generator |

## Claims

1. An apparatus (100) comprising:
- a random access memory device (130);
- at least one processing core (120) coupled via a first interface (1E) with the random access memory device (130), and
- a secure hardware element (110), comprising hash function circuitry (116), coupled directly with the random access memory device (130), the direct coupling being direct wiring not traversing any device comprised in the apparatus, the secure hardware element configured to obtain as input data from a memory space of the random access memory device (130), to produce as output a hash value of the input, to cryptographically sign the hash value using a physically unclonable function value of the apparatus (100) and to provide the signed hash value from the secure hardware element (110) as an attestation of the input data to a communication bus (180), via an interface connecting the secure hardware element (110) to the communication bus (180).

2. The apparatus (100) according to claim 1, wherein the physically unclonable function value of the apparatus (100) comprises a value characteristic of manufacturing variations of the random access memory device (130).

3. The apparatus (100) according to claim 1 or 2, wherein the secure hardware element (110) is configured to provide the hash value to platform configuration register circuitry comprised in the secure hardware element (110), the platform configuration register circuitry being configured to store plural hash values derived from plural memory spaces of the random access memory device (130).

4. The apparatus (100) according to any of claims 1-3, further configured to output an attestation of memory contents of the memory space of the random access memory device (130), the attestation comprising the hash value.

5. The apparatus (100) according to claim 4, configured to cryptographically sign the hash value using a private key of a public key - private key pair of a public key cryptosystem.

6. The apparatus (100) according to claim 5, wherein the secure hardware element (110) comprises circuitry arranged to cryptographically sign information, but does not comprise circuitry arranged to perform a decryption operation using the private key.

7. The apparatus (100) according to claim 5 or 6, wherein the public key cryptosystem comprises the Rivest-Shamir-Adleman, RSA, or the ElGamal cryptosystem.

8. The apparatus (100) according to any of claims 1 - 7, further comprising a read-only memory (160), and wherein the secure hardware element (110) is coupled via a second interface with the read-only memory (160), and wherein the secure hardware element (110) is configured to obtain as inputs the physically unclonable function value of the apparatus (100) or a second physically unclonable function value of the apparatus (100) and data from the read-only memory, (160) to generate a second hash value.

9. The apparatus (100) according to any of claims 1-8, wherein the at least one processing core (120) comprises a microcontroller processing core configured to execute computer code stored in the memory space of the random access memory device (130).

10. The apparatus (100) according to claim 9, wherein the apparatus (100) comprises a rail vehicle braking device.

11. A method in an apparatus (100) comprising:
- obtaining (310), by a secure hardware element (110), as input data from a memory space of a random access memory device (130);
- producing (320) as output a hash value of the input, and
- cryptographically signing (330) the hash value using a physically unclonable function value of the apparatus (100) and providing the signed hash value from the secure hardware element (110) as an attestation of the input data to a communication bus (180), via an interface connecting the secure hardware element (110) to the communication bus (180),
- wherein the apparatus (100) comprises the random access memory device (130), at least one processing core (120) coupled via a first interface with the random access memory device (130), and the secure hardware element (110), which is coupled directly with the random access memory device (130), the direct coupling being direct wiring not traversing any device comprised in the apparatus (100).

12. The method according to claim 11, wherein the physically unclonable function value of the apparatus (100) comprises a value characteristic of manufacturing variations of the random access memory device (130).

13. The method according to claim 11 or 12, comprising providing, by the secure hardware element (110), the hash value to platform configuration register circuitry comprised in the secure hardware element (110), the platform configuration register circuitry being configured to store plural hash values derived from plural memory spaces of the random access memory device (130).

14. The method according to any of claims 11 - 13, further comprising outputting an attestation of memory contents of the memory space of the random access memory device (130), the attestation comprising the hash value.

15. The method according to claim 14, further comprising cryptographically signing the hash value using a private key of a public key - private key pair of a public key cryptosystem.

16. The method according to claim 15, wherein the secure hardware element (110) comprises circuitry arranged to cryptographically sign information, but does not comprise circuitry arranged to perform a decryption operation using the private key.

17. The method according to claim 15 or 16, wherein the public key cryptosystem comprises the Rivest-Shamir-Adleman, RSA, or the ElGamal cryptosystem.

18. The method according to any of claims 11 - 17, wherein the apparatus (100) further comprises a read-only memory (160), and wherein the secure hardware element (110) is coupled via a second interface with the read-only memory (160), and wherein the method further comprises obtaining, by the secure hardware element (110), as inputs the physically unclonable function value of the apparatus (100) or a second physically unclonable function value of the apparatus (100), and data from the read-only memory (160), and generating a second hash value.

19. The method according to any of claims 11 - 18, wherein the at least one processing core (120) comprises a microcontroller processing core configured to execute computer code stored in the memory space of the random access memory device.

20. The method according to claim 19, wherein the apparatus (100) comprises a rail vehicle braking device.

21. An apparatus (100) comprising:
- means for obtaining (1L), by a secure hardware element (110), as input data from a memory space of a random access memory device (130);
- means for producing (116) as output a hash value of the input, and
- means for cryptographically signing the hash value using a physically unclonable function value of the apparatus (100) and for providing the signed hash value from the secure hardware element (110) as an attestation of the input data to a communication bus (180), via an interface connecting the secure hardware element (110) to the communication bus (180),
- wherein the apparatus (100) comprises the random access memory device (130), at least one processing core (120) coupled via a first interface with the random access memory device (130), and the secure hardware element 110), which is coupled directly with the random access memory device, the direct coupling being direct wiring not traversing any device comprised in the apparatus (100).

## Patentansprüche

1. Einrichtung (100), die Folgendes umfasst:
- Direktzugriffsspeichervorrichtung (130);
- mindestens einen Verarbeitungskern (120), der via eine erste Schnittstelle (1E) an die Direktzugriffsspeichervorrichtung (130) gekoppelt ist, und
- ein sicheres Hardwareelement (110), das eine Hashfunktionsschaltung (116) umfasst, die direkt an die Direktzugriffsspeichervorrichtung (130) gekoppelt ist, wobei die direkte Kopplung eine direkte Verdrahtung ist, die nicht über eine in der Einrichtung umfasste Vorrichtung verläuft, wobei das sichere Hardwareelement dazu ausgelegt ist, Daten aus einem Speicherraum der Direktzugriffsspeichervorrichtung (130) als Eingabe zu erhalten, um einen Hashwert der Eingabe als Ausgabe zu produzieren, um den Hashwert unter Verwendung eines physisch nicht klonbaren Funktionswertes der Einrichtung (100) kryptographisch zu signieren und den signierten Hashwert vom sicheren Hardwareelement (110) als eine Attestierung der Eingabedaten einem Kommunikationsbus (180) via eine Schnittstelle, die das sichere Hardwareelement (110) mit dem Kommunikationsbus (180) verbindet, bereitzustellen.

2. Einrichtung (100) nach Anspruch 1, wobei der physisch nicht klonbare Funktionswert der Einrichtung (100) einen Wert umfasst, der für Herstellungsvariationen der Direktzugriffsspeichervorrichtung (130) charakteristisch ist.

3. Einrichtung (100) nach Anspruch 1 oder 2, wobei das sichere Hardwareelement (110) dazu ausgelegt ist, den Hashwert einer Plattformauslegungsregisterschaltung bereitzustellen, die im sicheren Hardwareelement (110) umfasst ist, wobei die Plattformauslegungsregisterschaltung dazu ausgelegt ist, mehrere Hashwerte zu speichern, die aus mehreren Speicherräumen der Direktzugriffsspeichervorrichtung (130) abgeleitet werden.

4. Einrichtung (100) nach einem der Ansprüche 1 bis 3, die ferner dazu ausgelegt ist, eine Attestierung eines Speicherinhalts des Speicherraums der Direktzugriffsspeichervorrichtung (130) auszugeben, wobei die Attestierung den Hashwert umfasst.

5. Einrichtung (100) nach Anspruch 4, die dazu ausgelegt ist, den Hashwert unter Verwendung eines privaten Schlüssels eines Paares aus öffentlichem Schlüssel und privatem Schlüssel eines öffentlichen Schlüsselkryptosystems kryptographisch zu signieren.

6. Einrichtung (100) nach Anspruch 5, wobei das sichere Hardwareelement (110) eine Schaltung umfasst, die angeordnet ist, Informationen kryptographisch zu signieren, aber keine Schaltung umfasst, die angeordnet ist, unter Verwendung des privaten Schlüssels eine Entschlüsselungsoperation durchzuführen.

7. Einrichtung (100) nach Anspruch 5 oder 6, wobei das öffentliche Schlüsselkryptosystem das Rivest-Shamir-Adleman(RSA)- oder das ElGamal-Kryptosystem umfasst.

8. Einrichtung (100) nach einem der Ansprüche 1 bis 7, die ferner einen Nur-Lese-Speicher (160) umfasst, und wobei das sichere Hardwareelement (110) via eine zweite Schnittstelle an den Nur-Lese-Speicher (160) gekoppelt ist, und wobei das sichere Hardwareelement (110) dazu ausgelegt ist, den physisch nicht klonbaren Funktionswert der Einrichtung (100) oder einen zweiten physisch nicht klonbaren Funktionswert der Einrichtung (100) sowie Daten aus dem Nur-Lese-Speicher (160) als Eingaben zu erhalten, um einen zweiten Hashwert zu erzeugen.

9. Einrichtung (100) nach einem der Ansprüche 1 bis 8, wobei der mindestens eine Verarbeitungskern (120) einen Mikrosteuerungsverarbeitungskern umfasst, der dazu ausgelegt ist, im Speicherraum der Direktzugriffsspeichervorrichtung (130) gespeicherten Computercode auszuführen.

10. Einrichtung (100) nach Anspruch 9, wobei die Einrichtung (100) eine Schienenfahrzeugbremsvorrichtung umfasst.

11. Verfahren in einer Einrichtung (100), das Folgendes umfasst:
- Erhalten (310) von Daten aus einem Speicherraum der Direktzugriffsspeichervorrichtung (130) durch ein sicheres Hardwareelement (110) als Eingabe;
- Produzieren (320) eines Hashwertes der Eingabe als Ausgabe, und
- kryptographisches Signieren (330) des Hashwertes unter Verwendung eines physisch nicht klonbaren Funktionswertes der Einrichtung (100) und Bereitstellen des signierten Hashwertes vom sicheren Hardwareelement (110) als eine Attestierung der Eingabedaten für einen Kommunikationsbus (180) via eine Schnittstelle, die das sichere Hardwareelement (110) mit dem Kommunikationsbus (180) verbindet,
- wobei die Einrichtung (100) die Direktzugriffsspeichervorrichtung (130), mindestens einen Verarbeitungskern (120), der via eine erste Schnittstelle an die Direktzugriffsspeichervorrichtung (130) gekoppelt ist, und ein sicheres Hardwareelement (110), das direkt an die Direktzugriffsspeichervorrichtung (130) gekoppelt ist, umfasst, wobei die direkte Kopplung eine direkte Verdrahtung ist, die über keine in der Einrichtung (100) umfasste Vorrichtung verläuft.

12. Verfahren nach Anspruch 11, wobei der physisch nicht klonbare Funktionswert der Einrichtung (100) einen Wert umfasst, der für Herstellungsvariationen der Direktzugriffsspeichervorrichtung (130) charakteristisch ist.

13. Verfahren nach Anspruch 11 oder 12, das das Bereitstellen des Hashwertes durch das sichere Hardwareelement (110) für eine Plattformauslegungsregisterschaltung umfasst, die im sicheren Hardwareelement (110) umfasst ist, wobei die Plattformauslegungsregisterschaltung dazu ausgelegt ist, mehrere Hashwerte zu speichern, die aus mehreren Speicherräumen der Direktzugriffsspeichervorrichtung (130) abgeleitet werden.

14. Verfahren nach einem der Ansprüche 11 bis 13, das ferner das Ausgeben einer Attestierung eines Speicherinhalts des Speicherraums der Direktzugriffsspeichervorrichtung (130) umfasst, wobei die Attestierung den Hashwert umfasst.

15. Verfahren nach Anspruch 14, das ferner das kryptografische Signieren des Hashwertes unter Verwendung eines privaten Schlüssels eines Paares aus öffentlichem Schlüssel und privatem Schlüssel eines öffentlichen Schlüsselkryptosystems umfasst.

16. Verfahren nach Anspruch 15, wobei das sichere Hardwareelement (110) eine Schaltung umfasst, die angeordnet ist, Informationen kryptographisch zu signieren, aber keine Schaltung umfasst, die angeordnet ist, unter Verwendung des privaten Schlüssels eine Entschlüsselungsoperation durchzuführen.

17. Verfahren nach Anspruch 15 oder 16, wobei das öffentliche Schlüsselkryptosystem das Rivest-Shamir-Adleman(RSA)- oder das ElGamal-Kryptosystem umfasst.

18. Verfahren nach einem der Ansprüche 11 bis 17, wobei die Einrichtung (100) ferner einen Nur-Lese-Speicher (160) umfasst, und wobei das sichere Hardwareelement (110) via eine zweite Schnittstelle an den Nur-Lese-Speicher (160) gekoppelt ist, und wobei das Verfahren ferner das Erhalten des physisch nicht klonbaren Funktionswertes der Einrichtung (100) oder eines zweiten physisch nicht klonbaren Funktionswertes der Einrichtung (100) sowie von Daten aus dem Nur-Lese-Speicher (160) durch das sichere Hardwareelement (110) umfasst, um einen zweiten Hashwert zu erzeugen.

19. Verfahren nach einem der Ansprüche 11 bis 18, wobei der mindestens eine Verarbeitungskern (120) einen Mikrosteuerungsverarbeitungskern umfasst, der dazu ausgelegt ist, im Speicherraum der Direktzugriffsspeichervorrichtung gespeicherten Computercode auszuführen.

20. Verfahren nach Anspruch 19, wobei die Einrichtung (100) eine Schienenfahrzeugbremsvorrichtung umfasst.

21. Einrichtung (100), die Folgendes umfasst:
- Mittel zum Erhalten (1L) von Daten aus einem Speicherraum der Direktzugriffsspeichervorrichtung (130) durch ein sicheres Hardwareelement (110) als Eingabe;
- Mittel zum Produzieren (116) eines Hashwertes der Eingabe als Ausgabe, und
- Mittel zum kryptographischen Signieren des Hashwertes unter Verwendung eines physisch nicht klonbaren Funktionswertes der Einrichtung (100) und zum Bereitstellen des signierten Hashwertes vom sicheren Hardwareelement (110) als eine Attestierung der Eingabedaten für einen Kommunikationsbus (180) via eine Schnittstelle, die das sichere Hardwareelement (110) mit dem Kommunikationsbus (180) verbindet,
- wobei die Einrichtung (100) die Direktzuugriffsspeichervorrichtung (130), mindestens einen Verarbeitungskern (120), der via eine erste Schnittstelle an die Direktzugriffsspeichervorrichtung (130) gekoppelt ist, und ein sicheres Hardwareelement (110), das direkt an die Direktzugriffsspeichervorrichtung gekoppelt ist, umfasst, wobei die direkte Kopplung eine direkte Verdrahtung ist, die über keine in der Einrichtung (100) umfasste Vorrichtung verläuft.

## Revendications

1. Appareil (100) comprenant :
- un dispositif de mémoire vive (130) ;
- au moins un noyau de traitement (120) couplé via une première interface (1E) au dispositif de mémoire vive (130), et
- un élément matériel sécurisé (110), comprenant une circuiterie de fonction de hachage (116) couplée directement au dispositif de mémoire vive (130), le couplage direct étant un câblage direct ne traversant aucun dispositif compris dans l'appareil, l'élément matériel sécurisé étant configuré pour obtenir comme entrée des données à partir d'un espace mémoire du dispositif de mémoire vive (130), pour produire en sortie une valeur de hachage de l'entrée, pour signer cryptographiquement la valeur de hachage en utilisant une valeur de fonction physiquement non clonable de l'appareil (100) et pour fournir la valeur de hachage signée par l'élément matériel sécurisé (110) en tant qu'attestation des données d'entrée à un bus de communication (180), via une interface connectant l'élément matériel sécurisé (110) au bus de communication (180).

2. Appareil (100) selon la revendication 1, dans lequel la valeur de fonction physiquement non clonable de l'appareil (100) comprend une valeur caractéristique des variations de fabrication du dispositif de mémoire vive (130).

3. Appareil (100) selon la revendication 1 ou 2, dans lequel l'élément matériel sécurisé (110) est configuré pour fournir la valeur de hachage à une circuiterie de registre de configuration de plate-forme comprise dans l'élément matériel sécurisé (110), la circuiterie de registre de configuration de plate-forme étant configurée pour stocker plusieurs valeurs de hachage dérivées de plusieurs espaces mémoire du dispositif de mémoire vive (130).

4. Appareil (100) selon l'une des revendications 1 à 3, configuré en outre pour délivrer une attestation d'un contenu de mémoire de l'espace mémoire du dispositif de mémoire vive (130), l'attestation comprenant la valeur de hachage.

5. Appareil (100) selon la revendication 4, configuré pour signer cryptographiquement la valeur de hachage en utilisant une clé privée d'une paire clé publique-clé privée d'un système cryptographique à clé publique.

6. Appareil (100) selon la revendication 5, dans lequel l'élément matériel sécurisé (110) comprend une circuiterie conçue pour signer des informations cryptographiquement, mais ne comprend pas de circuiterie conçue pour effectuer une opération de décryptage en utilisant la clé privée.

7. Appareil (100) selon la revendication 5 ou 6, dans lequel le système cryptographique à clé publique comprend le système cryptographique Rivest-Shamir-Adleman, RSA, ou ElGamal.

8. Appareil (100) selon l'une des revendications 1 à 7, comprenant en outre une mémoire morte (160), et dans lequel l'élément matériel sécurisé (110) est couplé via une deuxième interface à la mémoire morte (160), et dans lequel l'élément matériel sécurisé (110) est configuré pour obtenir comme entrées la valeur de fonction physiquement non clonable de l'appareil (100) ou une deuxième valeur de fonction physiquement non clonable de l'appareil (100) et des données de la mémoire morte, (160) pour générer une deuxième valeur de hachage.

9. Appareil (100) selon l'une des revendications 1 à 8, dans lequel l'au moins un noyau de traitement (120) comprend un noyau de traitement microcontrôleur configuré pour exécuter un code informatique stocké dans l'espace mémoire du dispositif de mémoire vive (130).

10. Appareil (100) selon la revendication 9, dans lequel l'appareil (100) comprend un dispositif de freinage de véhicule ferroviaire.

11. Procédé dans un appareil (100) comprenant les étapes suivantes :
- obtenir (310), par un élément matériel sécurisé (110), comme entrée des données à partir d'un espace mémoire d'un dispositif de mémoire vive (130) ;
- produire (320) en sortie une valeur de hachage de l'entrée, et
- signer cryptographiquement (330) la valeur de hachage en utilisant une valeur de fonction physiquement non clonable de l'appareil (100) et fournir la valeur de hachage signée par l'élément matériel sécurisé (110) en tant qu'attestation des données d'entrée à un bus de communication (180), via une interface connectant l'élément matériel sécurisé (110) au bus de communication (180),
- dans lequel l'appareil (100) comprend le dispositif de mémoire vive (130), au moins un noyau de traitement (120) couplé via une première interface au dispositif de mémoire vive (130), et l'élément matériel sécurisé (110), qui est couplé directement au dispositif de mémoire vive (130), le couplage direct étant un câblage direct ne traversant aucun dispositif compris dans l'appareil (100).

12. Procédé selon la revendication 11, dans lequel la valeur de fonction physiquement non clonable de l'appareil (100) comprend une valeur caractéristique des variations de fabrication du dispositif de mémoire vive (130).

13. Procédé selon la revendication 11 ou 12, comprenant la fourniture, par l'élément matériel sécurisé (110), de la valeur de hachage à une circuiterie de registre de configuration de plate-forme comprise dans l'élément matériel sécurisé (110), la circuiterie de registre de configuration de plate-forme étant configurée pour stocker plusieurs valeurs de hachage dérivées de plusieurs espaces mémoire du dispositif de mémoire vive (130).

14. Procédé selon l'une des revendications 11 à 13, comprenant en outre l'émission d'une attestation d'un contenu de mémoire de l'espace mémoire du dispositif de mémoire vive (130), l'attestation comprenant la valeur de hachage.

15. Procédé selon la revendication 14, comprenant en outre la signature cryptographique de la valeur de hachage en utilisant une clé privée d'une paire clé publique-clé privée d'un système cryptographique à clé publique.

16. Procédé selon la revendication 15, dans lequel l'élément matériel sécurisé (110) comprend une circuiterie conçue pour signer des informations cryptographiquement, mais ne comprend pas de circuiterie conçue pour effectuer une opération de décryptage en utilisant la clé privée.

17. Procédé selon la revendication 15 ou 16, dans lequel le système cryptographique à clé publique comprend le système cryptographique Rivest-Shamir-Adleman, RSA, ou ElGamal.

18. Procédé selon l'une des revendications 11 à 17, dans lequel l'appareil (100) comprend en outre une mémoire morte (160), et dans lequel l'élément matériel sécurisé (110) est couplé via une deuxième interface à la mémoire morte (160), et dans lequel le procédé comprend en outre l'obtention, par l'élément matériel sécurisé (110), en tant qu'entrées, de la valeur de fonction physiquement non clonable de l'appareil (100) ou d'une deuxième valeur de fonction physiquement non clonable de l'appareil (100), et de données de la mémoire morte (160), et la génération d'une deuxième valeur de hachage.

19. Procédé selon l'une des revendications 11 à 18, dans lequel l'au moins un noyau de traitement (120) comprend un noyau de traitement microcontrôleur configuré pour exécuter un code informatique stocké dans l'espace mémoire du dispositif de mémoire vive.

20. Procédé selon la revendication 19, dans lequel l'appareil (100) comprend un dispositif de freinage de véhicule ferroviaire.

21. Appareil (100) comprenant :
- des moyens pour obtenir (1L), par un élément matériel sécurisé (110), comme entrée des données à partir d'un espace mémoire d'un dispositif de mémoire vive (130) ;
- des moyens pour produire (116) en sortie une valeur de hachage de l'entrée, et
- des moyens pour signer cryptographiquement la valeur de hachage en utilisant une valeur de fonction physiquement non clonable de l'appareil (100) et pour fournir la valeur de hachage signée par l'élément matériel sécurisé (110) en tant qu'attestation des données d'entrée à un bus de communication (180), via une interface connectant l'élément matériel sécurisé (110) au bus de communication (180),
- dans lequel l'appareil (100) comprend le dispositif de mémoire vive (130), au moins un noyau de traitement (120) couplé via une première interface au dispositif de mémoire vive (130), et l'élément matériel sécurisé 110), qui est couplé directement avec le dispositif de mémoire vive, le couplage direct étant un câblage direct ne traversant aucun dispositif compris dans l'appareil (100).
